# EUROPEAN PATENT SPECIFICATION

(11) **EP 1 569 127 B1**
(45) Date of publication and mention of the grant of the patent: **25.11.2009**
(21) Application number: 04004278.0
(22) Date of filing: 25.02.2004
(51) Int. Cl.: G06F 15/02

(54) **Method for modifying notifications of events in an electronic device and corresponding device and computer program product**
Verfahren zur Veränderung von Ereignisbenachrichtigungen in einem elektronischen Gerät und entsprechenden Gerät und Computerprogrammprodukt
Méthode pour modifier la notification d'événements dans un appareil électronique ainsi que l'appareil et le produit logiciel correspondants

(43) Date of publication of application: 31.08.2005
(73) Proprietor: Research In Motion Limited, Waterloo, Ontario N2L 3W8 (CA)
(72) Inventor: Yach, David, Waterloo, Ontario, N2K 2N1 (CA); Castell, David, Waterloo, Ontario, N2L 5P3 (CA); Adams, Neil, Waterloo, Ontario, N2K 4E4 (CA); Brown, Michael, K., Kitchener, Ontario, N2M 2Z2 (CA); Patterson, Ian, Petersburg, Ontario, N0B 2H0 (CA)
(74) Representative: MERH-IP Matias Erny Reichl Hoffmann

(56) References cited:
- US-B1- 6 208 996
- US-B1- 6 418 309

## Description

### Field of Invention

The present application relates generally to electronic devices and more particularly to a method for modifying notifications in an electronic device.

### Background of the Invention

Electronic devices can provide a variety of functions including notifying users of various events throughout the day. Electronic devices can include several different types of devices including desktop computers or mobile stations such as simple cell phones, smart telephones, wireless PDAs, and laptops with wireless 802.11 or bluebook chip sets. These devices run on a wide variety of networks from data-only networks such as Mobitex and DataTAC to complex voice and data networks such as GSM/GPRS, CDMA, EDGE, UMTS and W-CDMA networks. Events that can require notification include receiving a telephone call by a cell phone or a regular telephone. Other events can include receiving an e-mail or fax by a chiming of the daily alarm or alarm notifying the user of an upcoming appointment.

Although notifications are useful in alerting users of various events, they can also be a source of constant interruption, annoyance and even embarrassment. Users of devices with notification functions can face constant interruption and distraction as the devices ring or vibrate loudly at inappropriate times and places. For example, cell phones ring loudly in the middle of lectures, exams, movies, meetings, performances or various ceremonies. Such inopportune ringing causes embarrassment for the user of the device, interrupts the event and distracts the other participants. Moreover, in circumstances where there is a live performance, a lecture or an actual person performing a ceremony, the ringing (or any other loud method of notification) distracts the lecturer or the performer and can ruin the event. Another example is the chiming of the notification function on an electronic device during an important meeting, perhaps in the middle of an intense conversation or during court proceedings or cross-examination of witnesses. Once again, the chiming of the notification function can cause embarrassment to the owner of the device, can interrupt the mood of the event and can generally disrupt the entire event.

These problems have become so widespread that organizers of events have started speaking out and some have started taking precautions. For example, most lectures and movie theatres post signs asking people to turn off their cellular phones and personal digital devices. Also, it is not uncommon for the chair of meetings, or the fist speaker of any proceeding to politely remind all participants to turn off their cell phones or other electronic devices.

In an effort to solve this problem, manufacturers have come up with devices that have different modes of notification, such as vibrations and visual alerts, so that users can change the mode of notification if they are attending functions where interruptions are a serious problem. However, these devices fall short of solving the problem of audible notifications in inappropriate times and offer only a limited control for the user to reduce the problem. One of the short comings is that the user has to remember to manually change the method of notification at the right time. Many users do not put their mind to changing the method of notification, until the device goes off in the middle of the event causing the embarrassments, interruptions and distractions described above. Moreover, in an effort to quickly change the method of notification, users may mistakenly choose an even louder or just as distractive mode of notification and do not notice their mistake until the device goes off in the middle of the event, causing the same embarrassments, interruptions and distractions referred to above. The user needs to manually invoke these alternative notification methods each time s/he wants to change the method of notification. Another problem arises because the mode of notification does not get switched back to the "default" mode after the event is over. The user has to remember to turn notification back on to "default mode". Many users forget to turn notification back to the "default mode" and end up missing important appointments, phone calls or voicemails. Further, the user may turn off the device prior to the event, and may forget to turn the device back on, causing notifications to be visible instead of audible. This may have consequences for users that are very dependant on their electronic devices.

US6418309B1 discloses an apparatus and method for activating an operational mode, called "meeting mode", for a portable communications device when the user is engaged in a meeting or similar event and deactivating the mode when the event ends. Activating "meeting" mode changes some settings of the device compared to when it is deactivated. The settings associated with "meeting mode" are preferably configured by the user using a graphical user interface. However, once "meeting mode" is configured, the same collection of settings will be applied to every meeting until changed by the user. The meeting mode of operation may be activated and deactivated manually by the user or automatically as part of an application software program run on the device such as a calendar or to do list application.

US2001/049275 discloses a method of automatically changing the alert state of user devices for time-based and location-based events. In response to a time-based event, such as a scheduled calendar appointment, a system transmits a signal to an associated user device to change its alert state such as from an audible ringer mode to a non-audible vibrate mode. The system can make a similar alert state change upon receiving an indication of a location-based event such as detection of the user device within a particular building geographic area.

Preferably, there is provided a novel system, apparatus and method for changing methods of notification that obviates or mitigates at least one of the above-identified disadvantages.

According to one aspect, there is provided an electronic device comprising: at least one output device for emitting a plurality of different signals; and, a microcomputer configured to process a plurality of calendar appointments and a plurality of different types of other events during processing of each of said calendar appointments such that when one of said other events occurs during one of said plurality of calendar appointments said microcomputer derives a notification mode from one of a plurality of profiles, said notification mode based on at least one criterion associated with said calendar appointment; said microcomputer further configured to derive a notification behaviour from said notification mode that is uniquely associated with said type of said one of said other events; said notification behaviour identifying one of said signals; said microprocessor further configured to instruct said output device to emit said one of said signals (180; 184) identified by said notification behaviour when one of said other events occurs during said one of said plurality of calendar appointments.

The electronic device can be a wireless personal digital assistant, a personal computer, a cell telephone, a smart telephone or any other device that can signal users of the occurrence of events. Signals used to notify users can be audible, mechanical, inaudible, or combinations thereof.

The calendar appointment can be associated with a predefined notification mode. The other event can be either the receipt of an electronic message or the going off of a daily alarm, each of which the user would normally be notified of by a signal from the device. The electronic device can also include the functionality of a telephone and the other event can also be the receipt of a telephone call, which the user would normally be notified of by a signal from the device. The signal from the device can be in accordance with a notification mode associated with the calendar appointment or it can be selected based on a predefined characteristic of the calendar appointment such as a string of characters included in the calendar appointment. The calendar appointments and other events can occur in different applications stored on the device and their respective modes of notification can be based on a plurality of profiles configurable for each application.

The microcomputer can be operable to execute a message reader application and the other event can be a receipt of an email by the message reader application.

One of the criteria that can affect the mode of notification is the physical location that is sensed by the device. For example, the device can be a personal digital assistant and the physical location can be a docking cradle. Furthermore, the device can be a bluetooth device and the physical location can be a proximity to another bluetooth device.

In another aspect there is provided a method for modifying notifications in an electronic device comprising the steps of: processing one of a plurality of calendar appointments; processing one of a plurality of different other events during processing of said one of the plurality of calendar appointments; deriving a notification mode from one of a plurality of profiles, said notification mode based on at least one criterion associated with said one calendar appointment being processed; deriving a notification behaviour from said notification mode that is uniquely associated with said type of said one of said other events; said notification behaviour identifying one of said signals; and, instructing said output device to emit said one of said signals identified by said notification behaviour when one of said other events occurs during said one of said plurality of calendar appointments.

In still another aspect, there is provided a computer readable storage medium comprising computer executable instructions for implementing the method in accordance with the foregoing aspect of the invention.

### Brief Description of the Drawings

Certain embodiments will now be described, by way of example only, with reference to the attached figures, wherein:
Figure 1 is a schematic representation of an electronic device for modifying notifications in accordance with an embodiment;
Figure 2 is a block diagram of certain internal components within the device in Figure 1;
Figure 3 shows the device of Figure 1 with the main menu screen displaying a plurality of applications including a calendar, a notification setup, a message reader and a daily alarm;
Figure 4 shows the device of Figure 1 with the calendar application displaying a plurality of individual appointments for the date of January 31, 2000;
Figure 5 shows the device of Figure 1 with the notification setup application displaying a plurality of default modes of notification;
Figure 6 shows the device of Figure 1 with the message reader application displaying a plurality of emails received;
Figure 7 shows the device of Figure 1 with the daily alarm application displaying a designated time and an ON/OFF setting for the alarm;
Figure 8 shows a flow chart depicting a method for modifying notification settings in accordance with another embodiment;
Figure 9 shows the device of Figure 1 with the message reader application having received a new email at 10:30 a.m. on January 31, 2000;
Figure 10 shows the device of Figure 1 with the calendar application, showing that at 10:30 a.m. on January 31, 2000, the user of the device is in a departmental meeting;
Figure 11 shows the device of Figure 1 with the message reader application notifying the receipt of the email in Figure 9 by a flashing light from the LED indicator;
Figure 12 shows the device of Figure 1 with the message reader application receiving a new email at 12:30 p.m. on January 31, 2000;
Figure 13 shows the device of Figure 1 with the calendar application, showing that at 12:30 p.m. on January 31, 2000, the user of the device is in the middle of a dentist appointment;
Figure 14 shows the device of Figure 1 with message reader application notifying the receipt of the email in Figure 12 by producing a sound from the speaker;
Figure 15 shows the device of Figure 1 with the message reader application receiving a new email at 2:00 p.m. on January 31, 2000;
Figure 16 shows the device of Figure 1 with the calendar application, showing that at 2:00 p.m. on January 31, 2000, the user of the device does not have any appointments scheduled;
Figure 17 is a schematic representation of another embodiment with the notification setup application displaying a plurality of methods of notification;
Figure 17a shows the device of Figure 17 with the calendar application displaying a plurality of individual appointments for the date of January 31, 2000;
Figure 18 is a schematic representation of yet another embodiment with the main menu screen displaying a plurality of applications including an application called profile string matcher, as well as the calendar, notification setup, message reader and daily alarm applications;
Figure 19 shows the device of Figure 18, with the profile string matcher application displaying a plurality of strings, each associated with a different mode of notification;
Figure 20 shows the device of Figure 18, with the calendar application displaying a plurality of individual appointments for February 1, 2000;
Figure 21 shows a flow chart depicting a method for modifying notification settings in accordance with another embodiment;
Figure 22 shows the device of Figure 18 with the message reader application having received a new email at 4:30 p.m. on February 1, 2000;
Figure 23 shows the device of Figure 18 with the calendar application, showing that the description of the appointment at 4:30 p.m. includes the word "meeting";
Figure 24 shows a flow chart depicting a set of substeps that can be used to perform one of the steps shown in Figure 21;
Figure 25 shows the device of Figure 18 with the profile string matcher application showing that the string "meeting" is associated with the profile "Quiet".
Figure 26 shows the device of Figure 18 with the message reader application having received a new email at 6:30 p.m. on February 1, 2000;
Figure 27 shows the device of Figure 18 with the calendar application showing that at 6:30 p.m. the user is scheduled to have dinner with Bill;
Figure 28 shows the device of Figure 18 with the message reader application having received a new email at 8:30 p.m.;
Figure 29 shows the device of Figure 18 with the calendar application having no appointments scheduled at 8:30 p.m.

### Detailed Description of the Invention

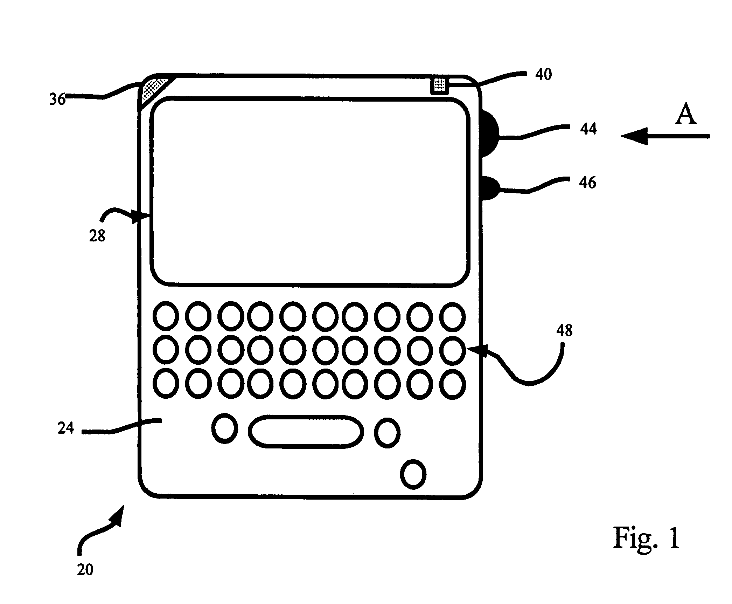

Referring to Figure 1, an electronic device for modifying notifications, in accordance with an embodiment is indicated generally at 20. In this embodiment, electronic device 20, is based on the computing environment and functionality of a wireless personal digital assistant. It is, however, to be understood that electronic device 20 can include the construction and functionality of other electronic devices, such as desktop computers, cell phones, smart telephones, and laptops with wireless 802.11 or bluebook chip sets and the like. In one embodiment, electronic device 20 includes, a housing 24, which frames an LCD display 28, a speaker 36, an LED indicator 40, a trackwheel 44, an exit key 46 and key pad 48. Trackwheel 44 and exit key 46 can be inwardly depressed along the path of arrow "A" as a means to provide additional user-input. It will be understood that housing 24, can be made from any suitable material as will occur to those of skill in the art.

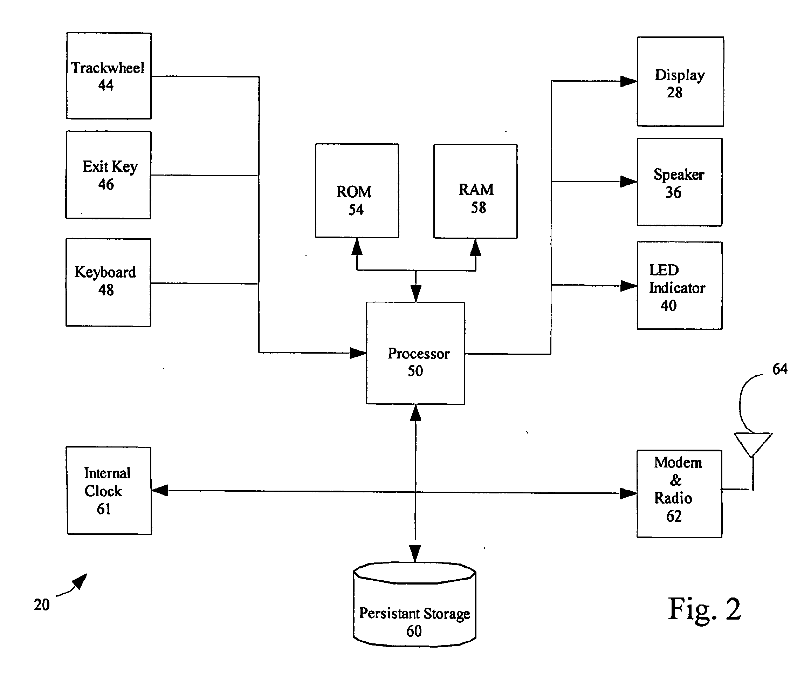

Referring now to Figure 2, a block diagram of certain internal components within device 20 are shown. Device 20 is based on a microcomputer that includes a processor 50 that is connected to a read-only-memory ("ROM") 54, which contains a plurality of applications executable by processor 50 that enables device 20 to perform certain functions. Processor 50 is also connected to a random access memory unit ("RAM") 58 and a persistent storage 60 which are responsible for various nonvolatile storage functions of device 20. Processor 50 can send output signals to various output devices including display 28, speaker 36, LED indicator 40, each of which generate specific outputs as instructed by processor 50. Processor 50, can also receive input from various input devices including trackwheel 44, exit key 46 and keyboard 48. Processor 50 is also connected to an internal clock 61 and a modem and radio 62 (not shown). Modem and radio 62 can be connected to various wireless networks through an antenna 64.

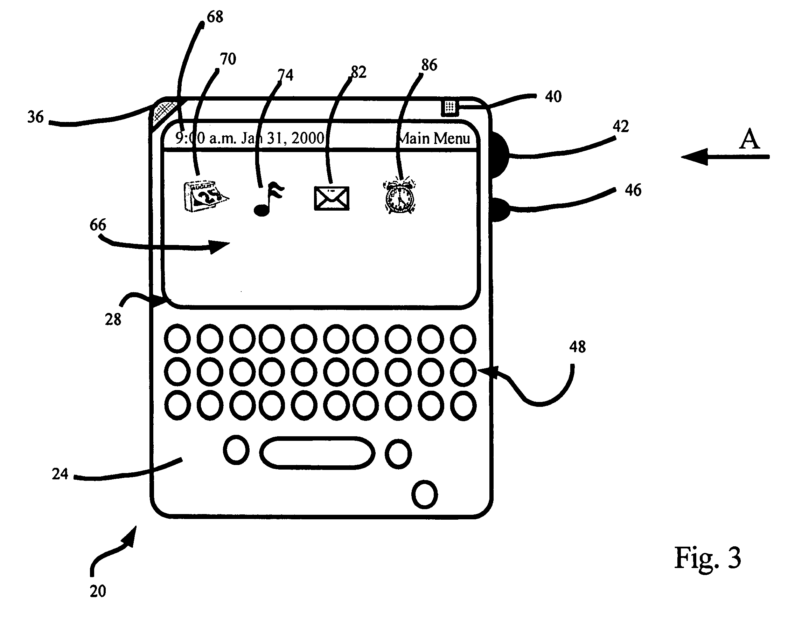

Device 20 is operable to execute various applications stored in ROM 54. Referring now to Figure 3, device 20 is shown with a main menu screen 66, that displays a system clock 68 which is updated according to internal clock 61 (not shown). Main menu screen 66 also displays a plurality of applications that are executable on processor 50. In one embodiment, such displayed applications include a calendar 70, a notification setup 74, a message reader 82, a daily alarm 86. When executed on processor 50, these applications cause device 20 to operate in various ways, as will be discussed further below. Trackwheel 44 can be used to scroll through the applications and to select a desired application by pressing inwardly, along the path of arrow A, on trackwheel 44. Exit key 46 can be used to exit any application by pressing inwardly, along the path of arrow A, on exit key 46.

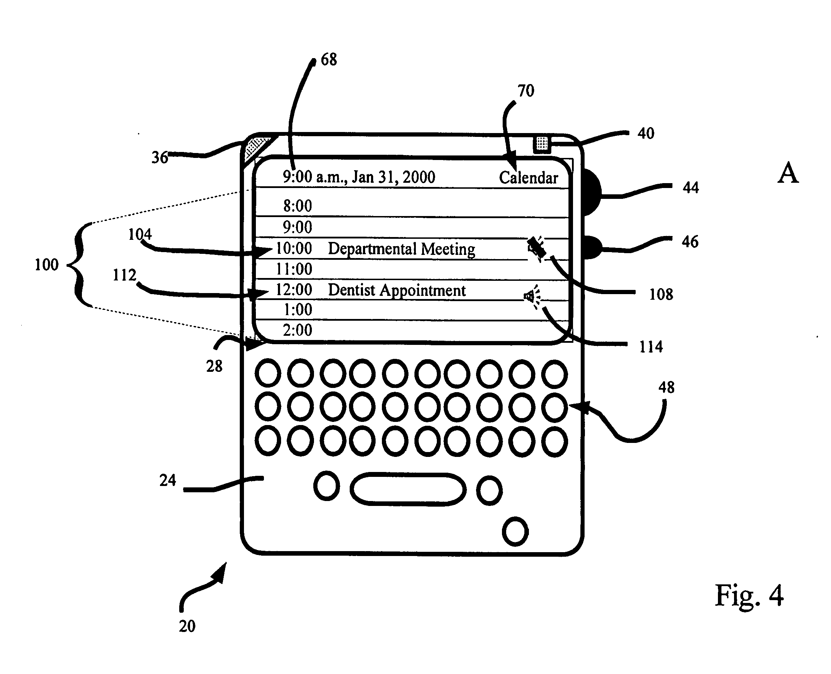

Referring now to Figure 4, device 20 is shown displaying the day's schedule 100 for January 31, 2000 using the application called calendar 70 on display 28. Schedule 100 includes a plurality of individual appointments 104 and 112. As illustrated in Figure 4, appointment 104 is a departmental meeting, from 10:00-11:00 a.m., and appointment 112 is a dentist appointment, from 12:00-1:00 p.m. Appointment 104 has a "no-speaker" icon 108 associated with it, while appointment 112 has a speaker icon 114 associated with it. Speaker icon 114 and "no-speaker" icon 108 will be discussed in greater detail below. Calendar 70 also displays a clock 68 that shows the current date and time according to internal clock 61 maintained in device 20.

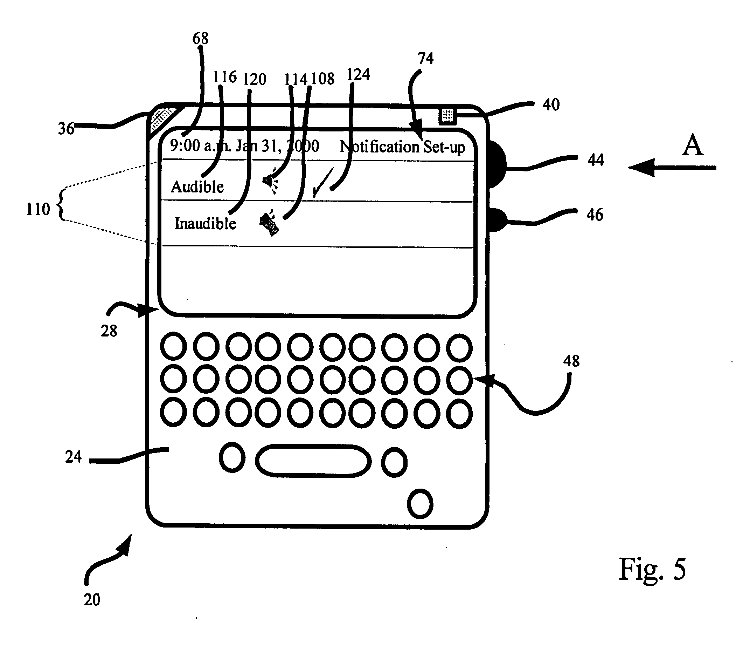

Referring now to Figure 5, device 20 is shown displaying the default modes of notification 110 using the application called notification setup 74 on display 28, comprising an audible mode 116 and an inaudible mode 120. Audible mode 116 is also associated with speaker icon 114 and inaudible mode 120 is also associated with "no-speaker" icon 108. As shown in Figure 5, there is a "check-mark" 124 beside speaker icon 114, indicating that the default mode of notification for the present example is audible mode 116. Using trackwheel 44, check-mark 124 can also be placed beside "no-speaker" icon 108, indicating that the default mode of notification is inaudible mode 120.

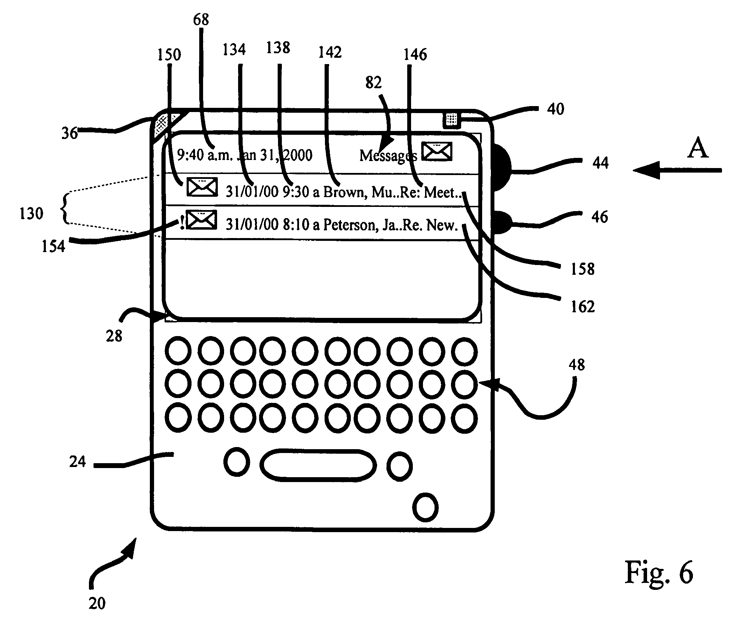

Referring now to Figure 6, device 20 is shown displaying a plurality of emails 130 using the application called message reader 82 on display 28. Emails 130 are received through a wireless network (not shown), that connects to device 20 via modem and radio 62 through antenna 64. Emails 130 have a series of information association with them, including, date of receipt 134, time of receipt 138, name of sender 142, subject line 146, and an envelope icon 150, that can be either opened or closed, indicating whether the email has been opened. Each email 130 can also have an exclamation mark 154 associated with it, indicating that the message is marked urgent by the sender. Trackwheel 44 can be used to scroll through individual emails 130, and inwardly depressed to open each individual email 130. Exit key 46 can be inwardly depressed to exit each individual email. For example in Figure 6, it is shown that email 158 sent by Murphy Brown, at 9:30 a.m. on Jan 31, 2000, is not marked urgent, has the subject line: "Re.: Meeting" and has not been opened. Similarly, email 162 sent by Jason Peterson at 8:10 a.m., is marked urgent, has the subject line: "New File" and has not been opened. Message reader 82 also includes clock 68, which functions as previously described in relation to calendar 70.

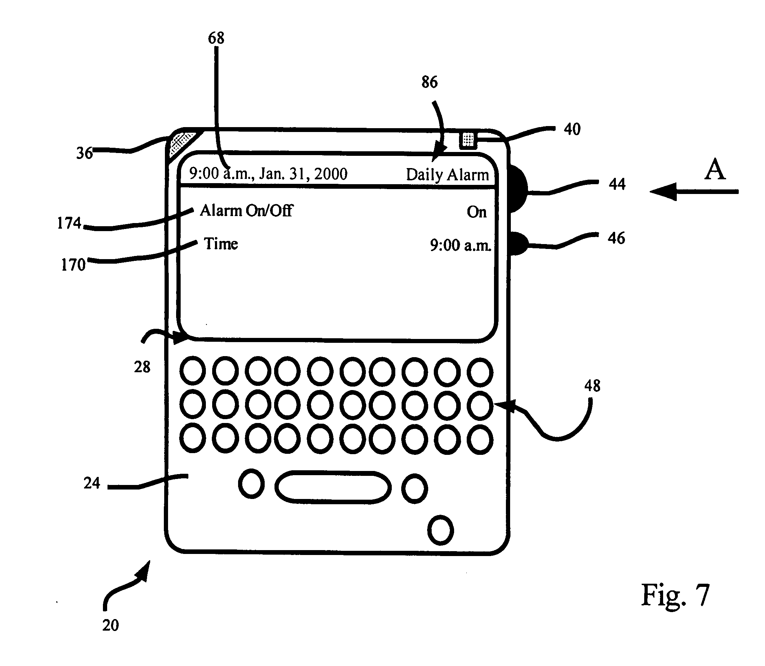

Referring now to Figure 7, device 20 is shown displaying a designated "Time" 170 and an "ON/OFF" setting 174 using the application called daily alarm 86 in display 28. As seen in Figure 7, "Time" 170 is associated with a specific time of the day and "ON/OFF" setting 174 can be either on or off. Accordingly, at 9:00 a.m. each day, an alarm will be generated by device 20 as shown in Figure 7. The operation of alarm 86 will be discussed further in detail below.

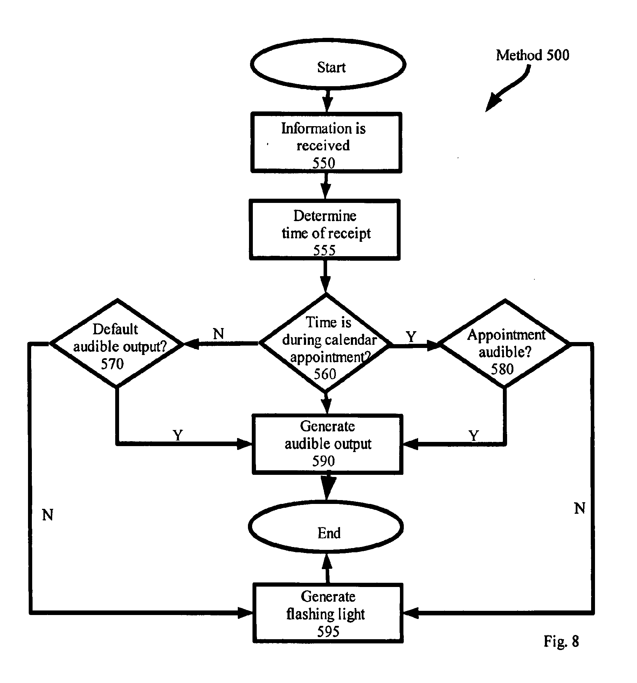

A method for modifying notifications in accordance with another embodiment will now be discussed with reference to the flow chart shown in Figure 8 and is indicated generally at 500. In order to assist in the explanation of method 500, reference will be made to the foregoing discussion of device 20. In order to further assist in the explanation of method 500, the sequence of steps in method 500 shall be followed in connection to a series of examples using device 20. In these examples, it will be assumed that device 20 receives a series of emails at different times during the day.

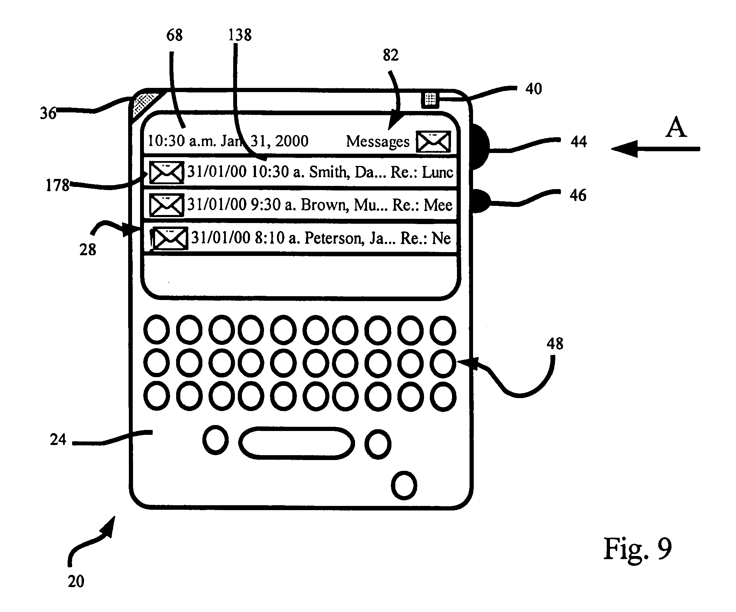

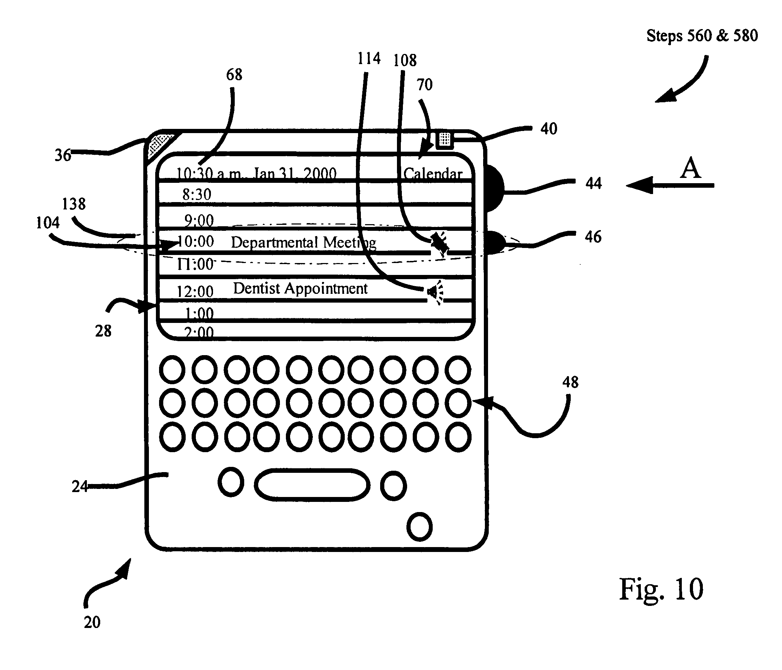

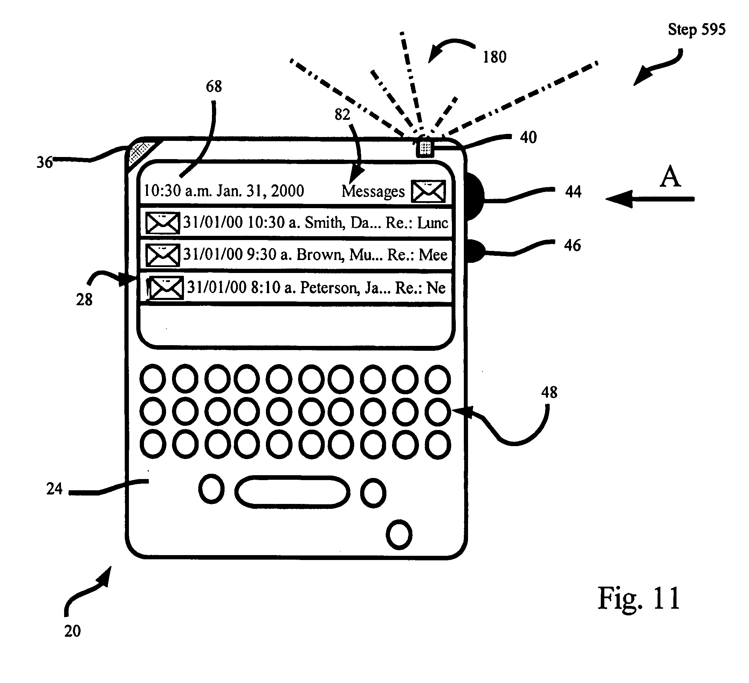

As demonstrated in the flow chart in Figure 8, information is received by device 20 at step 550. In the case of the present example, and referring now to Figure 9, it is to be assumed that the information received is an email and that the email received by device 20 at this step is email 178. Email 178 from David Smith, is received at 10:30 a.m. on January 31, 2000 and is not marked urgent. At step 555, the time of receipt 138 of the information is determined. Referring to Figure 9, time of receipt 138 of email 178, is determined to be 10:30 a.m. At this point, the method advances to step 560 where it is determined whether time of receipt 138 is during any of appointments marked in calendar 70. If time of receipt 138 is during one of such appointments, the method then advances to step 580. However, if time of receipt 138 is not during any of these times, the method advances to step 570. In connection with email 178, and referring now to Figure 10, it is determined that time of receipt 138 is during appointment 104 and the method, advances to step 580. At step 580, it is determined whether the appointment with which time of receipt 138 is associated is designated as audible or inaudible. If the appointment with which time of receipt 138 is associated with has speaker icon 114 associated with it, then the method proceeds to step 590 and an audible sound will emanate from speaker 36. If however, the appointment with which time of receipt 138 is associated with has "no-speaker" icon 108 associated with it, then the method proceeds to step 595 and a flashing light 180 will emanate from LED indicator 40. In the case of email 178, since appointment 104 is associated with "no-speaker" icon 108, the method advances to step 595 and referring now to Figure 11, flashing light 180 will emanate from LED indicator 40. At this point method 500 ends. There may be a variety of ways to cancel the output from LED indicator 40 by, for example, using exit key 46 and pressing inward on exit key 46 along arrow A.

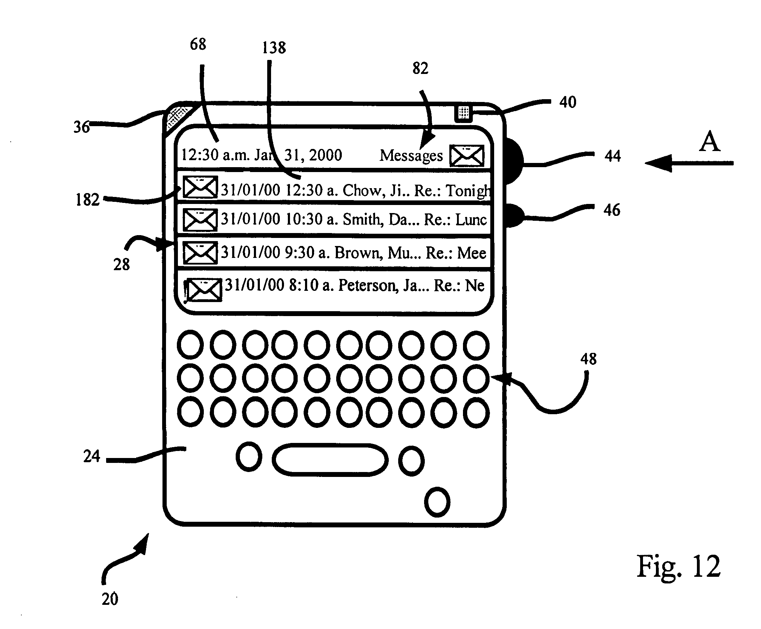

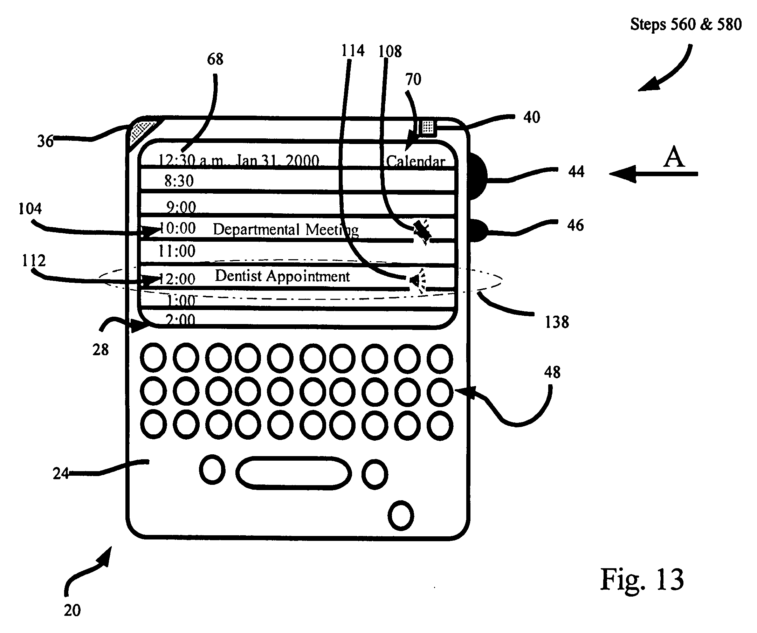

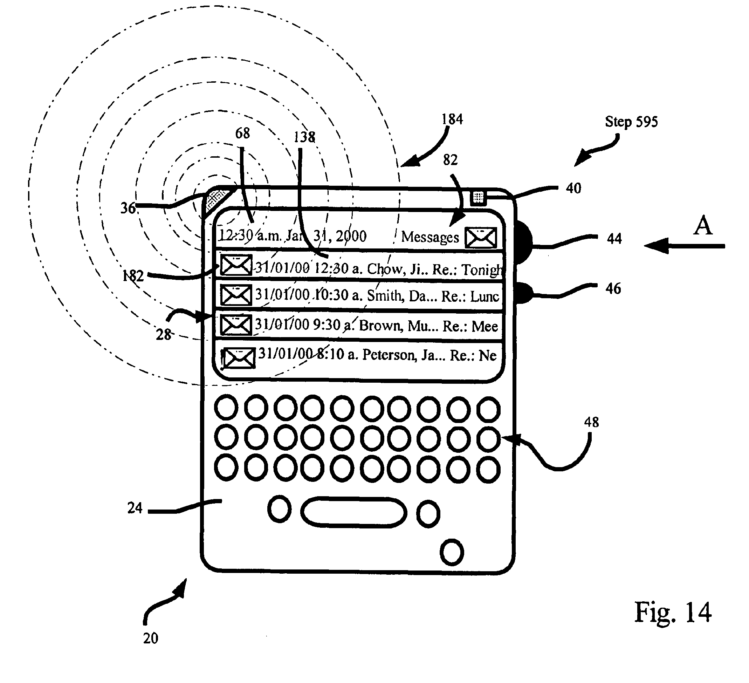

To further illustrate method 500, an additional example is helpful. Let us assume that device 20 receives another email 182 at 12:30 p.m., as shown in Figure 12. Following the steps of method 500 outlined above, at step 555, time of receipt 138 is determined to be 12:30 p.m. At step 560, and referring now to Figure 13, it would be determined that time of receipt 138 is during appointment 112 and hence method 500 proceeds to step 580. At step 580, and still referring to Figure 13, it will be determined that appointment 112 is associated with speaker icon 114. Hence the method proceeds to step 590, and as illustrated in Figure 14, a sound 184 emanates from speaker 36. Method 500 ends. Similar to the example above, there may be a variety of ways to cancel the output from speaker 36 by, for example, using exit key 46 and pressing inward on exit key 46 along arrow A.

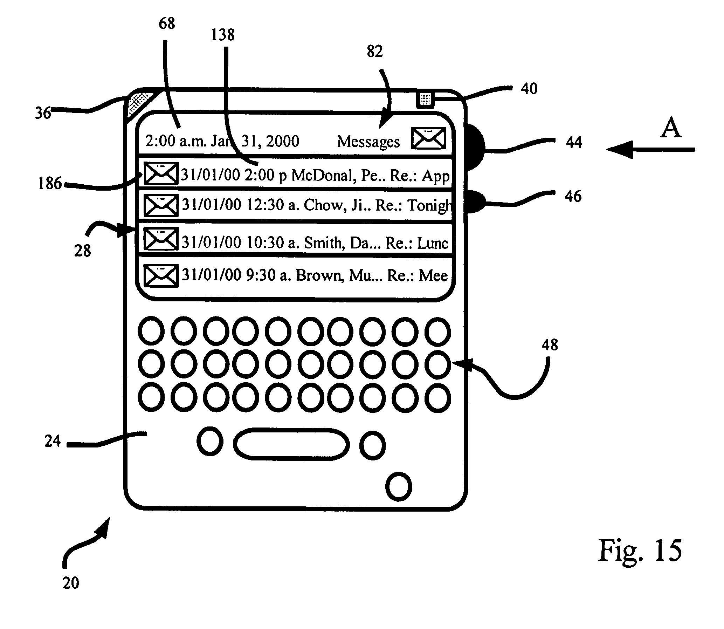

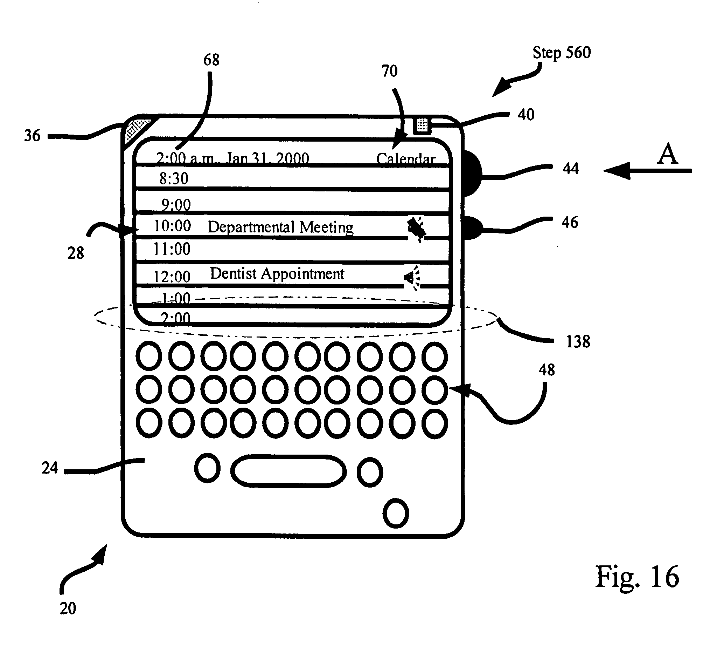

To help even further in illustrating method 500, it will be assumed that device 20 receives yet another email 186 at 2:00 p.m., as shown in Figure 15. As demonstrated in the flow chart in Figure 8, information is received by device 20 at step 550. In the case of the present example, and referring now to Figure 15, the information received is email 186. At step 555, the time of receipt 138 of the information is determined. Referring now to Figure 15, time of receipt 138 of email 186, is determined to be 2:00 p.m. At this point, method 500 advances to step 560 where it is determined whether time of receipt 138 is during any of appointments marked in calendar 70. If time of receipt 138 is during one of such appointments, the method then advances to step 580. If, however, time of receipt 138 is not during any of these times, the method advances to step 570. In connection with email 186, and referring now to Figure 16, it is determined that time of receipt 138 is not during any of the appointments in calendar 70 and the method advances to step 570. At step 570, the default notification in notification setup 74 is determined. If the mode of notification is set to audible mode 116, the method would proceed to step 590 and sound 184 would emanate from speaker 36. If, on the other hand, the mode of notification was set to inaudible mode 120, the method would proceed to step 595 and flashing light 180 would emanate from LED indicator 40. For the purposes of the example with email 186, it is assumed that notification setup 74 is configured as shown in Figure 5. Referring back to Figure 5, because checkmark 124 is associated with audible mode 116 the default mode of notification is audible. The method, thus, proceeds to step 590 and sound 184 emanates from speaker 36.

Although, in the above examples, the information received at step 550 of method 500 were incoming emails 178, 182 and 186, it will be understood that information received at step 550 could be any type of information including an alarm from daily alarm 86. If for example, "Time" 170 was set to a time during appointment 104, light 180 would emanate from LED indicator 40. Similarly if, "Time" 170 was set to a time during appointment 112, sound 184 would emanate from speaker 36 and if, "Time" 170 was set to a time outside of either appointments 104 or 112, sound 184 would emanate from speaker 36.

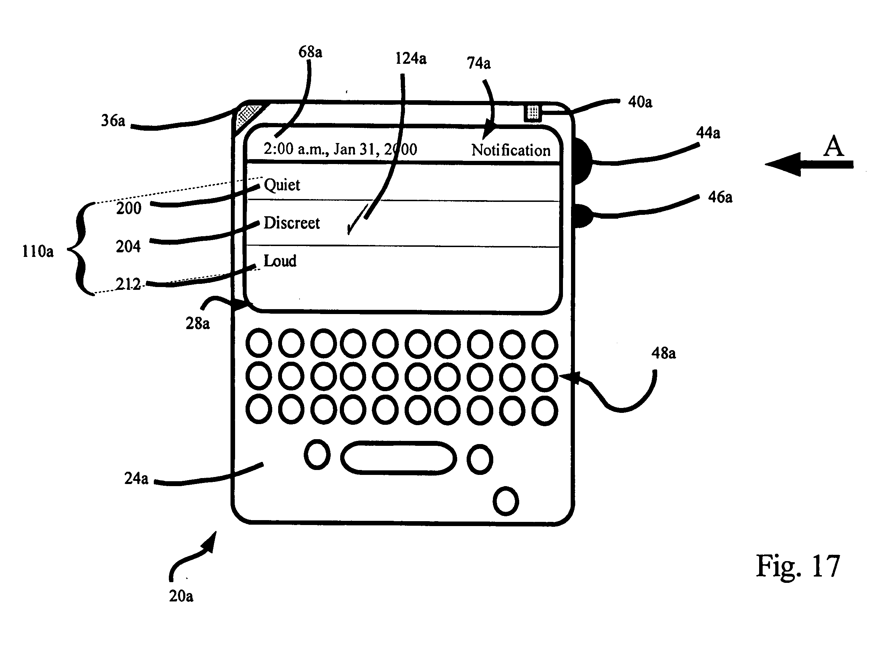

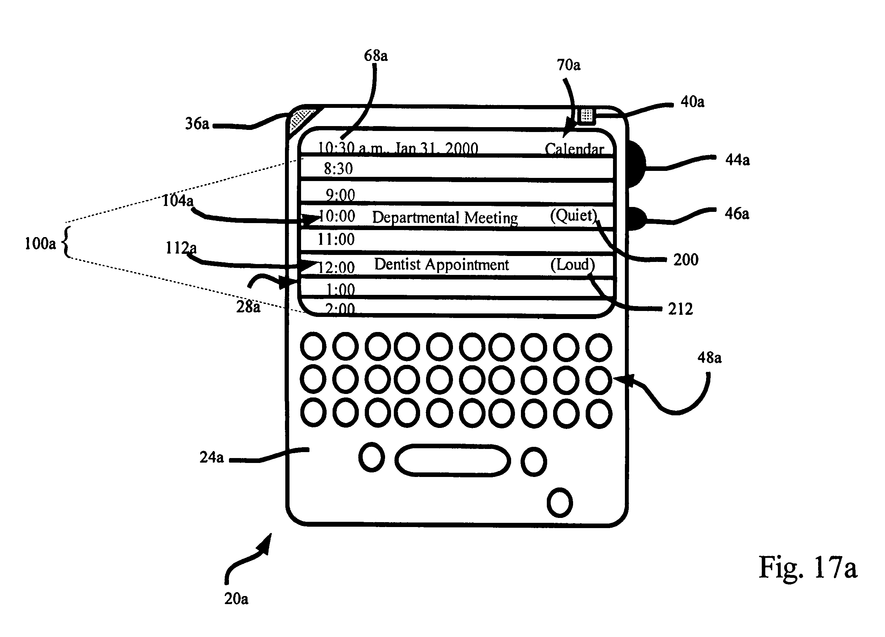

Referring now to Figure 17, an electronic device for modifying notifications in accordance with another embodiment is indicated generally at 20a. Device 20a is substantially the same as device 20 and like elements of device 20a bear the same reference characters, but followed by the suffix "a". Device 20a is shown in Figure 17 displaying different notification profiles 110a using the application called notification setup 74a. However, unlike notification setup 74 where the only choices for notification were audible and inaudible, notification setup 74a, allows users to customize their methods of notification. Notification setup 74a comprises a plurality of notification profiles 110a, which in the present embodiment have been labeled Quiet 200, Discreet 204, and Loud 212. Each of these profiles 110a can be customized by the manufacturer or by the user according to user preference. Profiles 110a can also be deleted and additional profiles can be added as desired. Table I shows how each profile 110a can be customized.

**Table I**

| **An Example of Customizing Methods of Notification** | | | |
|---|---|---|---|
| **Mode of Notification (Profiles 110a)** | **Application** | **Notification Behavior** | |
| Quiet 200 | Message Reader | Type: | Inaudible |
| | | Tune: | None |
| | | Volume: | Mute |
| | Daily Alarm | Type: | Audible |
| | | Tune: | Ring 2 |
| | | Volume: | Low |
| Discreet 204 | Message Reader | Type: | Audible & Inaudible |
| | | Tune: | Ring 3 |
| | | Volume: | Medium |
| | Daily Alarm | Type: | Audible |
| | | Tune: | Ring 1 |
| | | Volume: | Low |
| Loud 212 | Message Reader | Type: | Audible |
| | | Tune: | Ring 5 |
| | | Volume: | High |
| | Daily Alarm | Type: | Audible |
| | | Tune: | Ring 6 |
| | | Volume: | High |

Referring now to Figure 17, checkmark 124a, located beside the profile Discreet 204, indicates that the default mode of notification for the present example is Discreet 204. Trackwheel 44a can be used to scroll through the different profiles 110a and to select a particular profile 110a. Notification setup 24a can also be used to customize each profile 110a.

As illustrated in Table I, each profile can give rise to a different notification output for various applications on device 20a, and notification behavior can be customized according to a variety of criteria, such as "type", "tune" and "volume". "Type" can be either audible or inaudible. Audible means a sound emanating from speaker 36a and inaudible means a light flashing from LED indicator 40a. "Tune" can be any tune chosen by the manufacturer or the user and programmed into device 20a. This is the tune that would be played by speaker 36a when "type" is set to audible. "Volume" determines the volume of the tune and in the present embodiment can be low, medium or high.

In operation, during appointment 104a, the profile Quiet 200 would be in effect. Referring now to Figure 17a, the application calendar 70a has a series of appointments 100a. Appointment 104a is associated with the profile Quiet 200, and appointment 112a is associated with the profile Loud 212. It should now be apparent that whereas in device 20, each calendar appointment 100 had either a "speaker icon" 108 or a "no-speaker icon" 114 associated with it, in device 20a, each appointment, can have a particular profile 110a associated with it, instead. This is illustrated in Figure 17a, where appointment 104a is associated with the profile Quiet 200 and appointment 112a is associated with the profile Loud 212.

It will be apparent to those skilled in the art that Table I is just one example of the way in which notifications can be customized. Furthermore, the specific types, tunes and volumes outlined in Table I are not particularly limited. Also the list of specific applications associated with each mode is not particularly limited and can match the complete set of applications on device 20a.

As seen in Table I, if message reader 82a was to receive an email during appointment 104a which is associated with the profile Quiet, the output notification would be inaudible, with no tune or volume and light would emanate from LED indicator 40a. Similarly, if daily alarm 86a was to go off during appointment 104a, the output notification would be a low volume sound corresponding to a tune called "ring 2", emanating from speaker 36a.

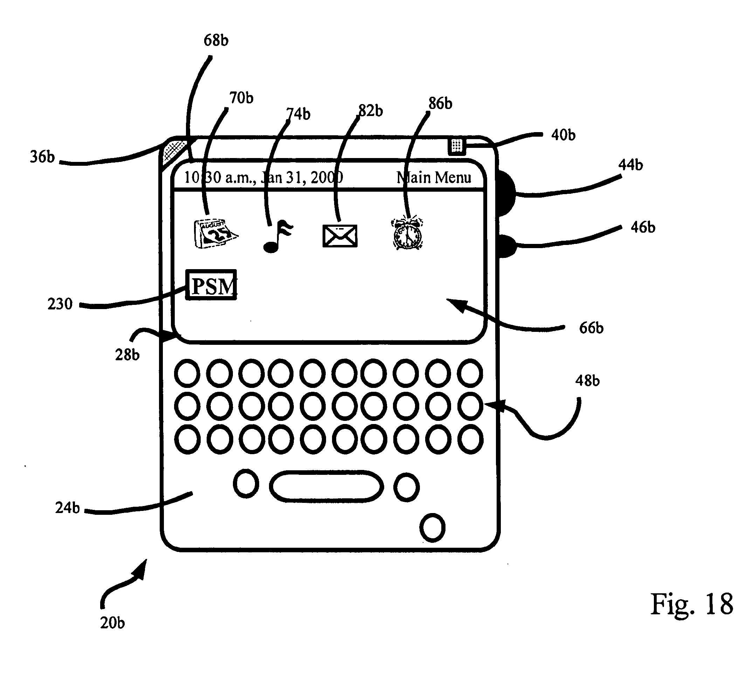

In another embodiment, and referring now to Figure 18, an electronic device for modifying notifications in accordance with another embodiment is indicated generally at 20b. Device 20b is substantially the same as device 20a and like elements of device 20a and device 20b will bear the same reference characters, but followed by the suffix "b" instead of suffix "a". In Figure 18, device 20b is shown with a main menu screen 66b, displaying an application called profile string matcher 230, as well as calendar 70b, notification setup 74b, message reader 82b and daily alarm 86b.

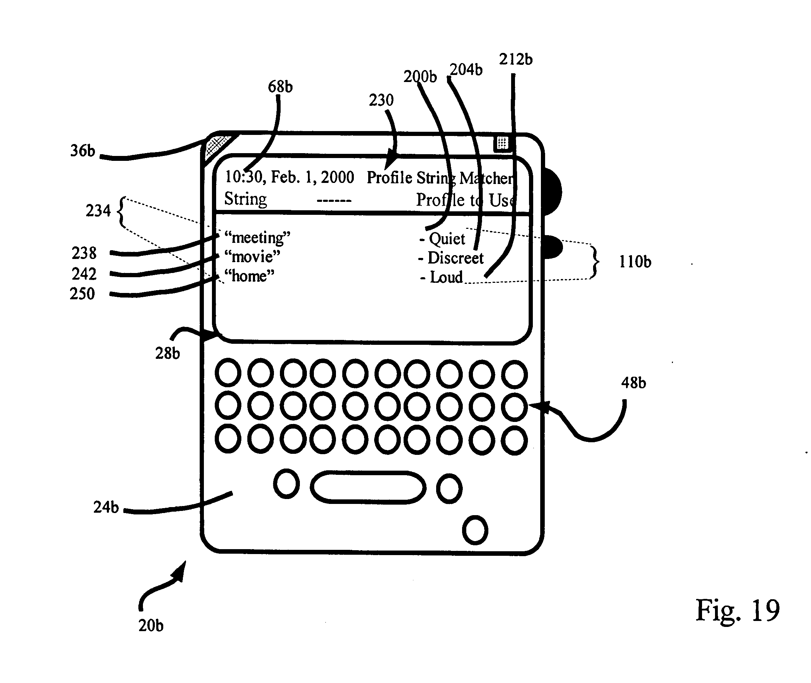

Referring now to Figure 19, device 20b is shown displaying a list of strings 234, associated with a different notification profile 110b, using the application called profile string matcher 230. List 234 contains a plurality of individual strings 238, 242 and 250, each associated with a notification profile 110b. As illustrated in Figure 19 string 238 is the word "meeting" and is associated with the profile "Quiet" 200b. String 242 is the word "movie" and is associated with the profile "Discreet" 204b. Finally string 250 is the word "home" and is associated with the profile "Loud" 212b.

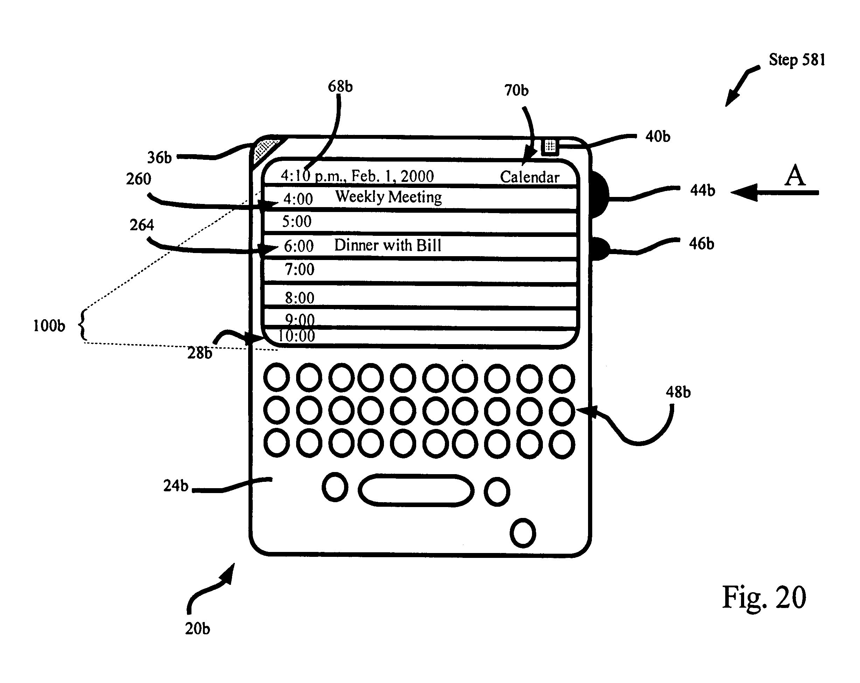

Referring now to Figure 20, device 20b is shown displaying the day's schedule 100b for February 1, 2000 using the application called calendar 70b on display 28b. Schedule 100b includes a plurality of individual appointments 260 and 264. As illustrated in Figure 20, appointment 260 is "weekly meeting", from 4:00-5:00 p.m., and appointment 264 is "dinner with Bill", from 6:00-7:00 p.m. Calendar 70b also displays a clock 68b that shows the current date and time.

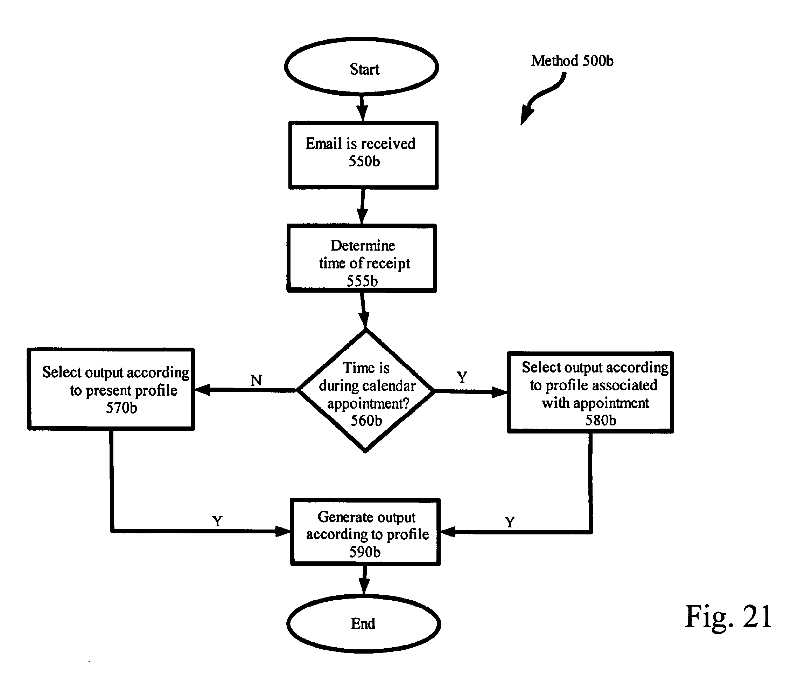

A method for modifying notifications in accordance with another embodiment will now be discussed with reference to the flow chart shown in Figure 21 and is indicated generally at 500b. In order to assist in the explanation of method 500b, reference will be made to the foregoing discussion of device 20b. In order to further assist in the explanation of method 500b, the sequence of steps in method 500b shall be followed in connection to a series of examples using device 20b. In these examples, it will be assumed that device 20b receives a series of emails at different times during the day.

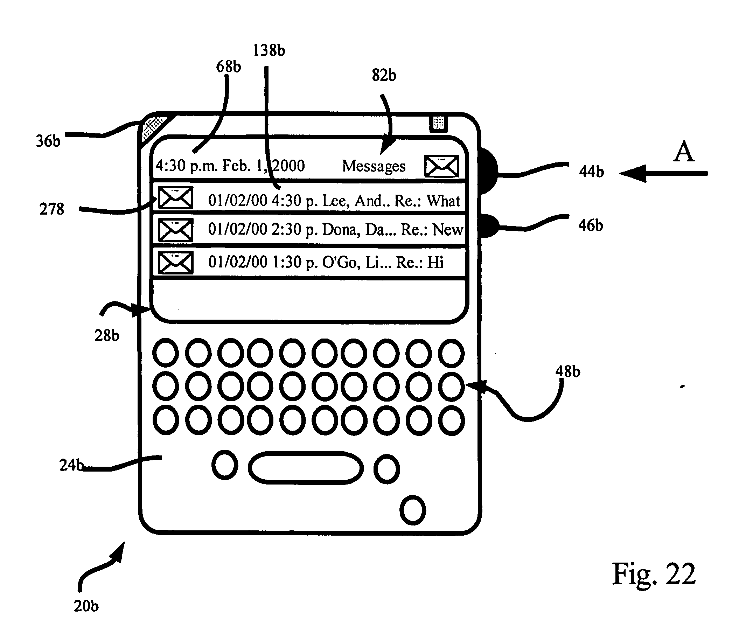

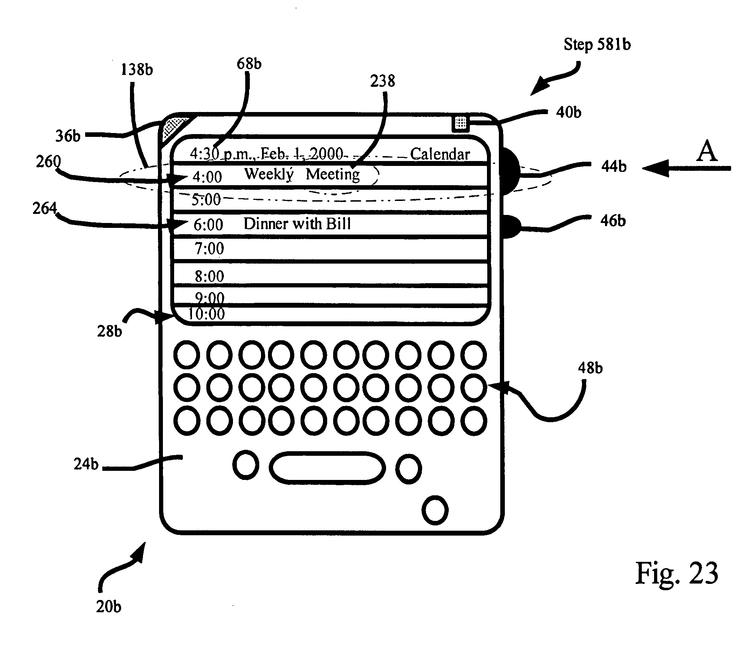

As demonstrated in the flow chart in Figure 21, emails are received by device 20b at step 550b. In one example, and referring now to Figure 22, it is to be assumed that one of the emails received by device 20a is email 278. Email 278 is sent by Andrea Lee at 4:30 p.m. on February 1, 2000 and is not marked urgent. At step 555b, the time of receipt 138b of the information is determined. Referring now to Figure 22, time of receipt 138b of email 278 is determined to be 4:30 p.m. At this point, the method advances to step 560b where it is determined whether time of receipt 138b is during any of the appointments marked in calendar 70b. If time of receipt 138b is during one of such appointments, the method then advances to step 580b. However, if time of receipt 138b is not during any of these appointments, the method advances to step 570b. In connection with email 278, and referring now to Figure 23, it is determined that time of receipt 138b is during appointment 260. The method, thus, advances to step 580b. At step 580b, the mode of notification according to a profile selected from notification setup 74b is determined.

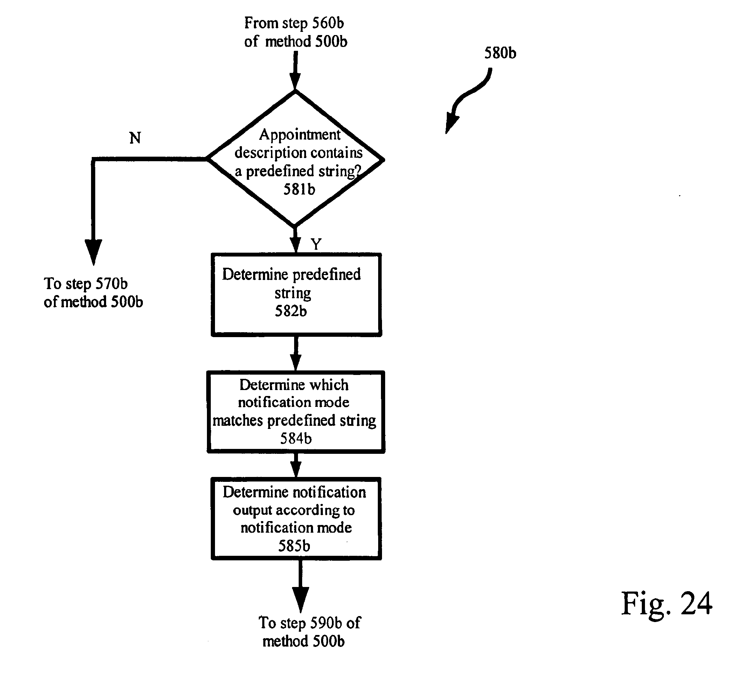

Step 580b "select output according to profile associated with appointment" of method 500b can be performed in a variety of ways, one example of which is demonstrated in a number of sub-steps in Figure 24. At step 581b, it is determined whether the appointment, with which time of receipt 138b is associated, includes any of the strings on list 234 of profile string matcher 230, outlined in Figure 19. If the description of the appointment includes one of the strings on list 234, the method advances to step 582b, where the type of notification corresponding to the matched string is determined. If, on the other hand, the description of the appointment does not include one of the strings on list 234, the method advanced to step 570b, where the mode of notification is defined according to the default mode of notification per notification setup 74b.

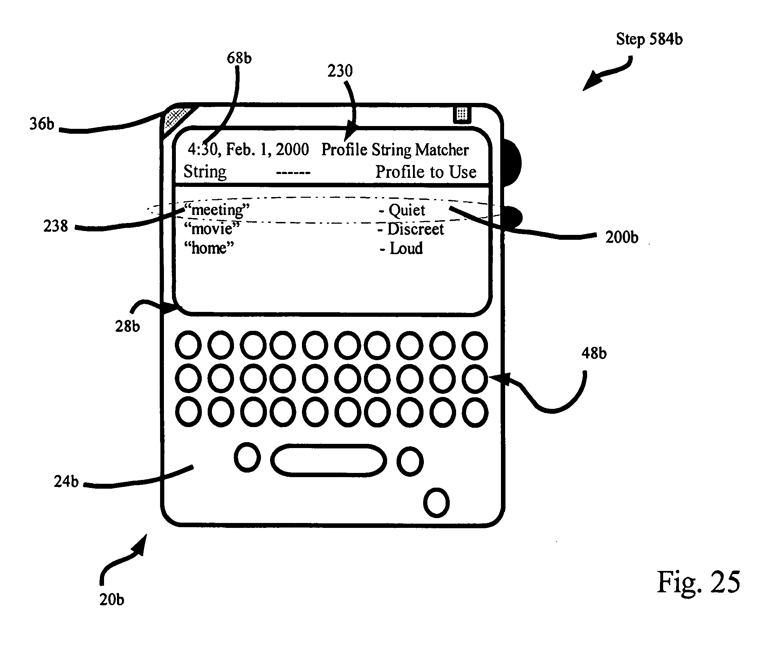

Referring now back to Figure 23, at step 581b, it is determined that the description of appointment 260 includes one of the strings on list 234. The method then advances to step 582b where "weekly meeting" contains the word "meeting", which matches string 238. The method then advances to step 584b where, referring now to Figure 25, it is determined that the notification profile associated with string 238 is the profile Quiet 200b. Once the notification profile is determined, the method then advances to step 585b where notification behavior is determined. For the purposes of this example, it is assumed that the modes of notification in this embodiment have been defined in accordance with Table I. In the case of the profile Quiet 200b, when there is an email received by message reader 82b, the notification is described as inaudible, with no tune or volume. Accordingly, at step 590b light emanates from LED indicator 40, indicating the receipt of email 278. Method 500b then ends.

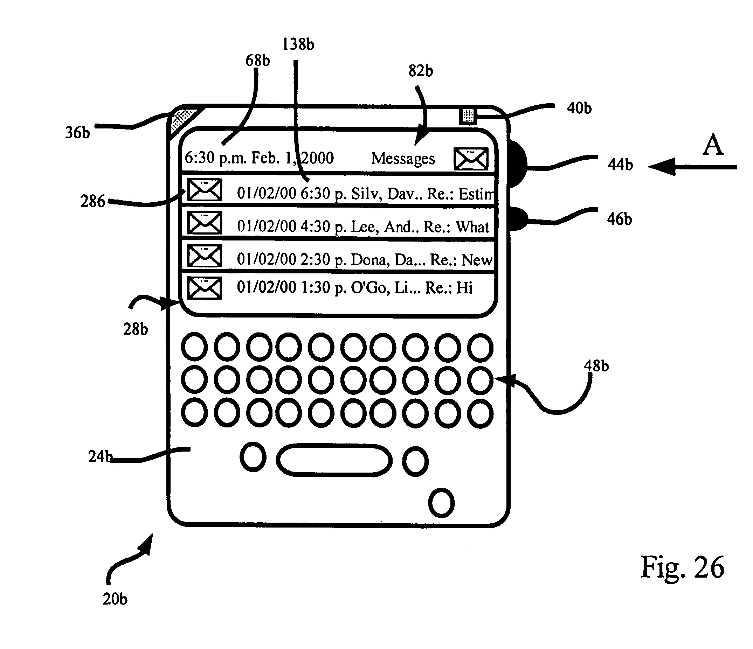

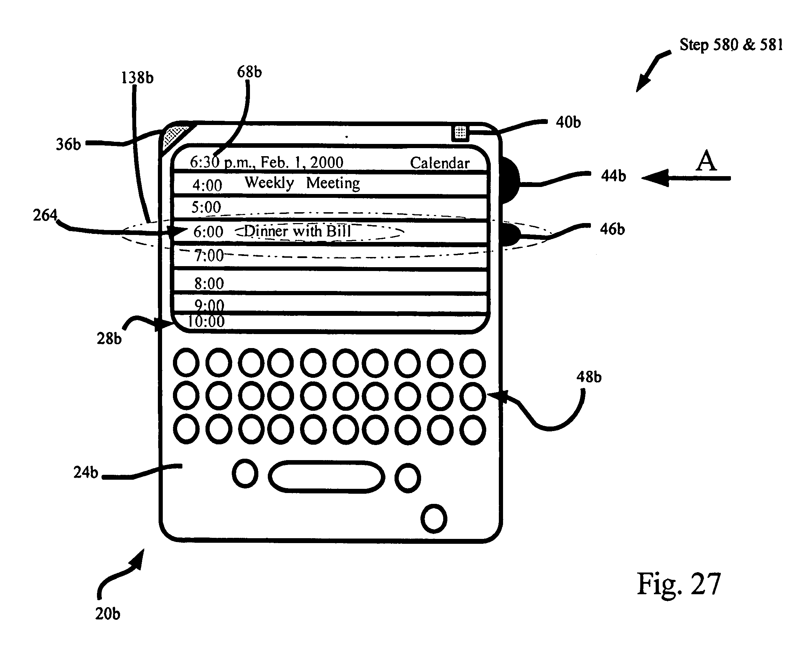

Method 500b will thus operate according to the receipt of different emails and during different appointments. For example, and referring now to Figures 26 and 27, it will be assumed that device 20b receives email 286 at 6:30 pm, which is during appointment 264. Since appointment 264 does not contain any of the strings on list 234, then during the performance of method 500b the method will advance to step 570b and device 20b will rely on the default notification profile established according to notification setup 74b. Assuming that notification setup 74b is similar to notification setup 74a and is set to the profile Discreet 204 as illustrated in Figure 17, the method advances to step 590b where device 20b generates output according to specifications of the profile Discreet 204 in Table I and results in a flashing of light from LED indicator 40 and a medium volume sound corresponding to a tune called "ring 3" from speaker 36.

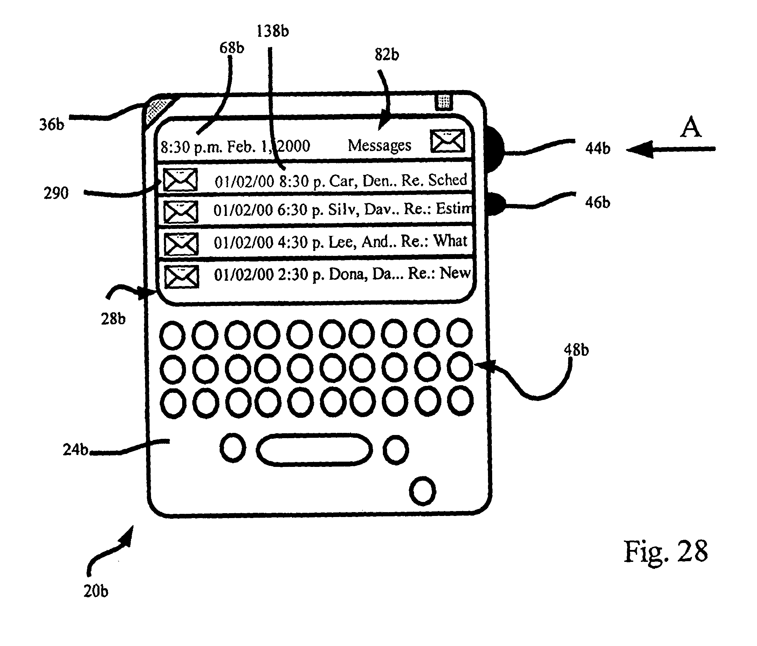

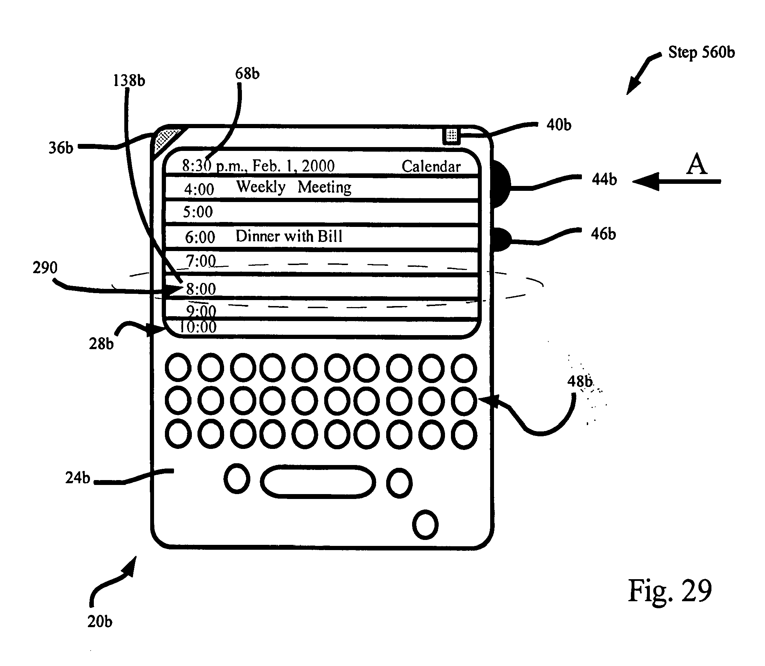

To further illustrate, and referring now to Figures 28 and 29, it is assumed that device 20b receives yet another email 290 at 8:30 p.m., which is not during any of the appointments in schedule 100b. By now it should be apparent to the reader that, devise 20b would go through each of steps 550b to 560b of method 500b to determine that time of receipt 8:30 is not during any of the appointments in calendar 70b. The method would then advance to step 570 where output is selected according to the profile selected in notification setup 74b. Assuming as we did before that notification setup 74b is similar to and is set up as in notification setup 74a, the receipt of email 290 results in a flashing of light from LED indicator 40 and a medium volume sound corresponding to a tune called "ring 3" from speaker 36.

In general it should now be apparent that instead of a user specifically having to configure a different notification for every individual appointment or for every criteria within that individual appointment, rules can be established by a user, or the manufacturer of the device, such that the device recognizes certain keywords or strings within the description of the individual appointment, and/or within the description of information received by the device and signals a particular method of notification. For example the electronic device can be configured to be silent during all appointments that contain the word "business meeting" or "movies" and to signal/beep quietly when the appointment is over. At the same time, it could, also, be configured to vibrate if the information received is an email or voicemail marked urgent within any appointments which contain the words "business meeting" or "movies" in the description of the appointment.

While the embodiments discussed herein are directed to specific embodiments, it will be understood that subsets and variations of the embodiments are within the scope of the invention. For example, it is to be understood that the receiving of emails is merely an example of an application that can generate a notification. Other examples of information that can be received by a device include, telephone calls, faxes, voice-mail messages, notification of appointments, daily alarm notifications, warning messages from the device in connection to its operation, such as "low battery" messages, or any other set of information for which a notification may be of use.

It is also contemplated that notifications can consist of a variety of audible, inaudible, vibrating and combinations of audible, inaudible and vibrating modes of notification. Audible modes of notification can include software sounds with a plurality of different frequencies and pitch. They can consist of different melodies and songs or they can be connected to the radio amongst many other possibilities. Similarly inaudible modes of notification include a variety of possibilities, such as a plurality of vibrations with varying intensities, plurality of colors of flashing and non-flashing lights and pop-up screens on the displays of computers, cell phones, personal digital assistants and etc. The different modes of notification, or combinations thereof can be predefined by the manufacturer of the electronic device or arbitrarily selected and added on by the user.

It is also contemplated that an electronic device can be configured to use different modes of notification depending on a variety of criteria. For example an electronic device can be configured to have one mode of notification if emails are received during a particular calendar event and a second mode of notification if the alarm goes off or a voice mail is received during the same calendar event. An electronic device could be further configured to have a different mode of notification if the email or voicemail is marked urgent or if the voice mail is from a certain person or area code. An electronic device could be configured to simply shut off all modes of notification during certain appointments and/or it could be configured to notify the user of receiving the information after the appointment is over. In general, an electronic device could be configured to have different modes of notification for different calendar events and even within each calendar event, the electronic device can be configured to have different modes of notification based on a plurality of other criteria, such as the type of information received, when and during which calendar event the information was received, by whom the information was received, whether the information was marked urgent or whether the information was received with certain other attributes.

In general, it is contemplated that rules can be established based on any type of information related to an individual appointment or information received by the device. For example, the electronic device can be configured to vibrate softly during all appointments between 6:00 p.m. to 10:00 p.m. and to be silent regardless of what type of information is received between 10:00 p.m. to 8:00 a.m., unless the information is a long distant phone call from a predefined person, in which case the device could ring loudly.

It is also contemplated that the device could change its method of notification based on the physical orientation of the device, such as whether it has a clamp shell that is opened or closed or whether it is being placed on a user's belt or on a device crib. For example, a device could be configured to vibrate softly if the device is out of the cradle and to have the LED indicator flashing when the device is in the cradle.

## Claims

1. An electronic device (20; 20a; 20b) comprising:
at least one output device (36; 40; 36a; 40a) for emitting a plurality of different signals (180; 184); and,
a microcomputer configured to process a plurality of calendar appointments (104; 112; 104a; 112a; 260; 264) and a plurality of different types of other events (178; 182; 186; 278; 286; 290) during processing of each of said calendar appointments (104; 112; 104a; 112a; 260; 264) such that when one of said other events (178; 182; 186; 278; 286; 290) occurs during one of said plurality of calendar appointments (104; 112; 104a; 112a; 260; 264) said microcomputer derives a notification mode (116; 120; 200; 204; 212; 200b; 204b; 212b) from one of a plurality of profiles (110a), said notification mode (116; 120; 200; 204; 212; 200b; 204b; 212b) based on at least one criterion associated with said calendar appointment;
said microcomputer further configured to derive a notification behaviour from said notification mode that is uniquely associated with said type of said one of said other events; said notification behaviour identifying one of said signals (180; 184);
said microprocessor further configured to instruct said output device (36; 40; 36a; 40a; 36b; 40b) to emit said one of said signals (180; 184) identified by said notification behaviour when one of said other events occurs during said one of said plurality of calendar appointments.

2. The electronic device (20, 20a, 20b) as claimed in claim 1, wherein said plurality of profiles (110a) are customizable.

3. The electronic device (20; 20a; 20b) as claimed in claim 1 or 2, wherein said device (20; 20a; 20b) comprises a wireless personal digital assistant, a personal computer, a cell telephone, a smart telephone or any combination thereof.

4. The electronic device (20; 20a; 20b) as claimed in any of claims 1 to 3, wherein said signals (180; 184) comprise audible, mechanical or visual signals or any combination thereof.

5. The electronic device (20; 20a; 20b) as claimed in any of claims 1 to 4, wherein said other event is a receipt of an electronic message (178; 182; 186; 278; 286; 290) or a daily alarm and said signal (180; 184) identifies receipt of said message or daily alarm.

6. The electronic device (20; 20a; 20b) as claimed in any of claims 1 to 4 wherein said electronic device (20; 20a; 20b) includes functionality of a telephone and said other event is a receipt of a telephone call.

7. The electronic device (20b) as claimed in any preceding claim, wherein said notification mode (200b; 204b; 212b) is automatically selected based on a predefined string of characters (238; 242; 250) included in said calendar appointment (260).

8. The electronic device (20; 20a; 20b) as claimed in any preceding claim, wherein said other events occur in different applications (70; 82; 86) stored on said device (20; 20a; 20b) and said notification mode (116; 120; 200; 204; 212; 200b; 204b; 212b) is based on the plurality of profiles (110a) which are configurable for each said application.

9. The electronic device (20; 20a; 20b) as claimed in any preceding claim, wherein said output devices (36; 40; 36a; 40a) include a flashing Light Emitting Diode 'LED' output device for emitting a visual signal and a speaker for emitting an audible signal.

10. The electronic device (20; 20a; 20b) as claimed in any preceding claim, wherein each of said plurality of different profiles (110a) gives rise to a different notification output for other events occurring in different applications (70; 82; 86) stored on said device (20; 20a; 20b).

11. A method for modifying notifications in an electronic device (20; 20a; 20b) comprising the steps of:
processing one of a plurality of calendar appointments (104; 112; 104a; 112a; 260; 264);
processing one of a plurality of different other events (178; 182; 186; 278; 286; 290) during processing of said one of the plurality of calendar appointments (104; 112; 104a; 112a; 260; 264);
deriving a notification mode (116; 120; 200; 204; 212; 200b; 204b; 212b) from one of a plurality of profiles (110a), said notification mode (116; 120; 200; 204; 212; 200b; 204b; 212b) based on at least one criterion associated with said one calendar appointment being processed;
deriving a notification behaviour from said notification mode that is uniquely associated with said type of said one of said other events; said notification behaviour identifying one of said signals (180; 184); and,
instructing said output device (36; 40; 36a; 40a; 36b; 40b) to emit said one of said signals (180; 184) identified by said notification behaviour when one of said other events occurs during said one of said plurality of calendar appointments.

12. The method as claimed in claim 11, wherein the plurality of profiles (110a) are customizable.

13. The method as claimed in claim 11 or 12, wherein said device (20; 20a; 20b) comprises a wireless personal digital assistant, a personal computer, a cell telephone, a smart telephone or any combination thereof.

14. The method as claimed in any of claims 11 to 13, wherein said signals (180; 184) comprise audible, mechanical or visual signals or any combination thereof.

15. The method as claimed in any of claims 11 to 14, wherein said other event (178; 182; 186; 278; 286; 290) is a receipt of an electronic message or daily alarm and said signal identifies receipt of said message or alarm.

16. The method as claimed in any of claims 11 to 14, wherein said electronic device (20; 20a; 20b) includes functionality of a telephone and said other event (178; 182; 186; 278; 286; 290) is a receipt of a telephone call.

17. The method as claimed in any of claims 11 to 16, wherein said notification mode (116; 120; 200; 204; 212; 200b; 204b; 212b) is automatically selected based on a predefined string of characters (234) included with said calendar appointment (104; 112; 104a; 112a; 260; 264).

18. The method as claimed in any one of claims 11 to 17, wherein each of said plurality of different profiles (110a) gives rise to a different notification output for other events occurring in different applications (70; 82; 86).

19. A computer-readable storage medium containing a set of instructions for an electronic device (20; 20a; 20b), said set of instructions comprising instructions to implement a method as claimed in any one of claims 11 to 18.

## Patentansprüche

1. Elektronisches Gerät (20; 20a; 20b), umfassend:
mindestens eine Ausgabeeinrichtung (36; 40; 36a; 40a) zum Ausgeben einer Mehrzahl verschiedener Signale (180; 184); und
einen Mikrocomputer, der konfiguriert ist zum Verarbeiten einer Mehrzahl von Kalenderterminen (104; 112; 104a; 112a; 260; 264) und einer Mehrzahl verschiedener Typen anderer Ereignisse (178; 182; 186; 278; 286; 290) während der Verarbeitung von jedem der Kalendertermine (104; 112; 104a; 112a; 260; 264), sodass, wenn eines der anderen Ereignisse (178; 182; 186; 278; 286; 290) während einem aus der Mehrzahl von Kalenderterminen (104; 112; 104a; 112a; 260; 264) auftritt, der Mikrocomputer einen Benachrichtigungsmodus (116; 120; 200; 204; 212; 200b; 204b; 212b) aus einem von einer Mehrzahl von Profilen (110a) ableitet, wobei der Benachrichtigungsmodus (116; 120; 200; 204; 212; 200b; 204b; 212b) auf mindestens einem Kriterium basiert, das dem Kalendertermin zugeordnet ist;
wobei der Mikrocomputer des Weiteren konfiguriert ist zum Ableiten eines Benachrichtigungsverhaltens aus dem Benachrichtigungsmodus, das dem Typ des einen der anderen Ereignisse eindeutig zugeordnet ist; wobei das Benachrichtigungsverhalten eines der Signale (180; 184) identifiziert;
wobei der Mikrocomputer des Weiteren dazu konfiguriert ist, die Ausgabeeinrichtung (36; 40; 36a; 40a; 36b; 40b) anzuweisen, das eine der Signale (180; 184) auszugeben, welches durch das Benachrichtigungsverhalten identifiziert wird, wenn eines der anderen Ereignisse während dem einen aus der Mehrzahl von Kalenderterminen auftritt.

2. Elektronisches Gerät (20, 20a, 20b) gemäß Anspruch 1, wobei die Mehrzahl von Profilen (110a) anpassbar sind.

3. Elektronisches Gerät (20; 20a; 20b) gemäß Anspruch 1 oder 2, wobei das Gerät (20; 20a; 20b) einen drahtlosen PDA (Personal Digital Assistant), einen PC (Personal Computer), ein Mobiltelefon, ein intelligentes Telefon oder jede Kombination aus diesen umfasst.

4. Elektronisches Gerät (20; 20a; 20b) gemäß einem der Ansprüche 1 bis 3, wobei die Signale (180; 184) akustische, mechanische oder optische Signale oder jede Kombination aus diesen umfassen.

5. Elektronisches Gerät (20; 20a; 20b) gemäß einem der Ansprüche 1 bis 4, wobei das andere Ereignis ein Empfang einer elektronischen Nachricht (178; 182; 186; 278; 286; 290) oder eines täglichen Alarms ist und das Signal (180; 184) den Empfang der Nachricht oder des täglichen Alarms identifiziert.

6. Elektronisches Gerät (20; 20a; 20b) gemäß einem der Ansprüche 1 bis 4, wobei das elektronische Gerät (20; 20a; 20b) die Funktion eines Telefons einschließt und wobei das andere Ereignis der Empfang eines Telefonanrufs ist.

7. Elektronisches Gerät (20b) gemäß einem der vorherigen Ansprüche, wobei der Benachrichtigungsmodus (200b; 204b; 212b) automatisch ausgewählt wird auf der Basis einer vordefinierten Zeichenfolge (238; 242; 250), die in dem Kalendertermin (260) enthalten ist.

8. Elektronisches Gerät (20; 20a; 20b) gemäß einem der vorherigen Ansprüche, wobei die anderen Ereignisse in verschiedenen Anwendungen (70; 82; 86) auftreten, welche in dem Gerät (20; 20a; 20b) gespeichert sind, und wobei der Benachrichtigungsmodus (116; 120; 200; 204; 212; 200b; 204b; 212b) auf der Mehrzahl von Profilen (110a) basiert, die für jede der Anwendungen konfiguriert werden können.

9. Elektronisches Gerät (20; 20a; 20b) gemäß einem der vorherigen Ansprüche, wobei die Ausgabeeinrichtungen (36; 40; 36a; 40a) eine blinkende LED-Ausgabeeinrichtung (Light Emitting Diode - Leuchtdiode) zum Ausgeben eines optischen Signals sowie einen Lautsprecher zum Ausgeben eines akustischen Signals einschließen.

10. Elektronisches Gerät (20; 20a; 20b) gemäß einem der vorherigen Ansprüche, wobei jedes aus der Mehrzahl von verschiedenen Profilen (110a) eine verschiedene Benachrichtigungsausgabe für andere Ereignisse bewirkt, die in verschiedenen Anwendungen (70; 82; 86) auftreten, welche in dem Gerät (20; 20a; 20b) gespeichert sind.

11. Verfahren zur Veränderung von Benachrichtigungen in einem elektronischen Gerät (20; 20a; 20b), das Verfahren umfassend die folgenden Schritte:
das Verarbeiten von einem aus einer Mehrzahl von Kalenderterminen (104; 112; 104a; 112a; 260; 264);
das Verarbeiten von einem aus einer Mehrzahl von verschiedenen anderen Ereignissen (178; 182; 186; 278; 286; 290) während der Verarbeitung des einen aus der Mehrzahl von Kalenderterminen (104; 112; 104a; 112a; 260; 264);
das Ableiten eines Benachrichtigungsmodus (116; 120; 200; 204; 212; 200b; 204b; 212b) aus einem aus einer Mehrzahl von Profilen (110a), wobei der Benachrichtigungsmodus (116; 120; 200; 204; 212; 200b; 204b; 212b) auf mindestens einem Kriterium basiert, das dem einen Kalenderereignis zugeordnet ist, welches gerade verarbeitet wird;
das Ableiten eines Benachrichtigungsverhaltens aus dem Benachrichtigungsmodus, das dem Typ des einen der anderen Ereignisse eindeutig zugeordnet ist; wobei das Benachrichtigungsverhalten eines der Signale (180; 184) identifiziert; und
das Anweisen der Ausgabeeinrichtung (36; 40; 36a; 40a; 36b; 40b), das eine der Signale (180; 184) auszugeben, welches durch das Benachrichtigungsverhalten identifiziert wird, wenn eines der anderen Ereignisse während dem einen aus der Mehrzahl von Kalenderterminen auftritt.

12. Verfahren gemäß Anspruch 11, wobei die Mehrzahl von Profilen (110a) anpassbar sind.

13. Verfahren gemäß Anspruch 11 oder 12, wobei das Gerät (20; 20a; 20b) einen drahtlosen PDA (Personal Digital Assistant), einen PC (Personal Computer), ein Mobiltelefon, ein intelligentes Telefon oder jede Kombination aus diesen umfasst.

14. Verfahren gemäß einem der Ansprüche 11 bis 13, wobei die Signale (180; 184) akustische, mechanische oder optische Signale oder jede Kombination aus diesen umfassen.

15. Verfahren gemäß einem der Ansprüche 11 bis 14, wobei das andere Ereignis (178; 182; 186; 278; 286; 290) ein Empfang einer elektronischen Nachricht oder eines täglichen Alarms ist und das Signal den Empfang der Nachricht oder des täglichen Alarms identifiziert.

16. Verfahren gemäß einem der Ansprüche 11 bis 14, wobei das elektronische Gerät (20; 20a; 20b) die Funktion eines Telefons einschließt und wobei das andere Ereignis (178; 182; 186; 278; 286; 290) der Empfang eines Telefonanrufs ist.

17. Verfahren gemäß einem der Ansprüche 11 bis 16, wobei der Benachrichtigungsmodus (116; 120; 200; 204; 212; 200b; 204b; 212b) automatisch ausgewählt wird auf der Basis einer vordefinierten Zeichenfolge (234), die in dem Kalendertermin (104; 112; 104a; 112a; 260; 264) enthalten ist.

18. Verfahren gemäß einem der Ansprüche 11 bis 17, wobei jedes aus der Mehrzahl von verschiedenen Profilen (110a) eine verschiedene Benachrichtigungsausgabe für andere Ereignisse bewirkt, die in verschiedenen Anwendungen (70; 82; 86) auftreten.

19. Computerlesbares Speichermedium, das einen Satz von Befehlen für ein elektronisches Gerät (20; 20a; 20b) enthält, wobei dieser Satz von Befehlen Befehle zum Implementieren eines Verfahrens gemäß einem der Ansprüche 11 bis 18 umfasst.

## Revendications

1. Dispositif électronique (20 ; 20a ; 20b) comportant :
au moins un dispositif de sortie (36 ; 40 ; 36a ; 40a) pour émettre une pluralité de signaux différents (180 ; 184) ; et,
un micro-ordinateur configuré pour traiter une pluralité de rendez-vous de calendrier (104 ; 112 ; 104a ; 112a ; 260 ; 264) et une pluralité de différents types d'autres événements (178 ; 182 ; 186 ; 278 ; 286 ; 290) durant le traitement de chacun desdits rendez-vous de calendrier (104 ; 112 ; 104a ; 112a ; 260 ; 264) de telle sorte que quand un desdits autres événements (178 ; 182 ; 186 ; 278 ; 286 ; 290) se produit durant un rendez-vous parmi ladite pluralité de rendez-vous de calendrier (104 ; 112 ; 104a ; 112a ; 260 ; 264) ledit micro-ordinateur dérive un mode de notification (116 ; 120 ; 200 ; 204 ; 212 ; 200b ; 204b ; 212b) d'un profil parmi une pluralité de profils (110a), ledit mode de notification (116 ; 120 ; 200 ; 204 ; 212 ; 200b ; 204b ; 212b) étant basé sur au moins un critère associé audit rendez-vous de calendrier ;
ledit micro-ordinateur étant de plus configuré pour dériver un comportement de notification dudit mode de notification qui est associé de façon unique audit type dudit un desdits autres événements ; ledit comportement de notification identifiant un desdits signaux (180; 184) ;
ledit microprocesseur étant de plus configuré pour donner instruction audit dispositif de sortie (36 ; 40 ; 36a ; 40a ; 36b ; 40b) d'émettre ledit un desdits signaux (180 ; 184) identifié par ledit comportement de notification quand un desdits autres événements se produit durant ledit un rendez-vous parmi ladite pluralité de rendez-vous de calendrier.

2. Dispositif électronique (20, 20a, 20b) tel que revendiqué dans la revendication 1, où ladite pluralité de profils (110a) sont personnalisables.

3. Dispositif électronique (20 ; 20a ; 20b) tel que revendiqué dans la revendication 1 ou 2, où ledit dispositif (20 ; 20a ; 20b) comporte un assistant numérique personnel sans fil, un ordinateur personnel, un téléphone cellulaire, un téléphone intelligent ou n'importe quelle combinaison de ces derniers.

4. Dispositif électronique (20 ; 20a ; 20b) tel que revendiqué dans n'importe lesquelles des revendications 1 à 3, où lesdits signaux (180 ; 184) comportent des signaux audibles, mécaniques ou visuels ou n'importe quelle combinaison de ces derniers.

5. Dispositif électronique (20 ; 20a ; 20b) tel que revendiqué dans n'importe lesquelles des revendications 1 à 4, où ledit autre événement est une réception d'un message électronique (178 ; 182 ; 186 ; 278 ; 286 ; 290) ou d'une alerte quotidienne et ledit signal (180 ; 184) identifie la réception dudit message ou de ladite alerte quotidienne.

6. Dispositif électronique (20 ; 20a ; 20b) tel que revendiqué dans n'importe lesquelles des revendications 1 à 4 où ledit dispositif électronique (20 ; 20a ; 20b) comprend la fonctionnalité d'un téléphone et ledit autre événement est une réception d'un appel téléphonique.

7. Dispositif électronique (20b) tel que revendiqué dans n'importe quelle revendication précédente, où ledit mode de notification (200b ; 204b ; 212b) est automatiquement sélectionné sur la base d'une chaîne prédéfinie de caractères (238 ; 242 ; 250) comprise dans ledit rendez-vous de calendrier (260).

8. Dispositif électronique (20 ; 20a ; 20b) tel que revendiqué dans n'importe quelle revendication précédente, où lesdits autres événements se produisent dans des applications différentes (70 ; 82 ; 86) stockées sur ledit dispositif (20 ; 20a ; 20b) et ledit mode de notification (116 ; 120 ; 200 ; 204 ; 212 ; 200b ; 204b ; 212b) est basé sur la pluralité de profils (110a) qui sont configurables pour chaque dite application.

9. Dispositif électronique (20 ; 20a ; 20b) tel que revendiqué dans n'importe quelle revendication précédente, où lesdits dispositifs de sortie (36 ; 40 ; 36a ; 40a) comprennent un dispositif de sortie à diode électroluminescente « LED » clignotante pour émettre un signal visuel et un haut-parleur pour émettre un signal audible.

10. Dispositif électronique (20 ; 20a ; 20b) tel que revendiqué dans n'importe quelle revendication précédente, où chaque profil parmi ladite pluralité de profils différents (110a) donne lieu à une sortie de notification différente pour d'autres événements se produisant dans des applications différentes (70 ; 82 ; 86) stockées sur ledit dispositif (20 ; 20a ; 20b).

11. Procédé pour modifier des notifications dans un dispositif électronique (20 ; 20a ; 20b) comportant les étapes visant à :
traiter un rendez-vous parmi une pluralité de rendez-vous de calendrier (104 ; 112 ; 104a; 112a ; 260 ; 264) ;
traiter un événement parmi une pluralité d'autres événements différents (178 ; 182 ; 186 ; 278 ; 286 ; 290) durant le traitement dudit rendez-vous parmi la pluralité de rendez-vous de calendrier (104 ; 112 ; 104a ; 112a ; 260 ; 264) ;
dériver un mode de notification (116 ; 120 ; 200 ; 204 ; 212 ; 200b ; 204b ; 212b) d'un profil parmi une pluralité de profils (110a), ledit mode de notification (116 ; 120 ; 200 ; 204 ; 212 ; 200b ; 204b ; 212b) étant basé sur au moins un critère associé audit rendez-vous de calendrier en train d'être traité ;
dériver un comportement de notification dudit mode de notification qui est associé de façon unique audit type dudit un desdits autres événements ; ledit comportement de notification identifiant un desdits signaux (180 ; 184) ; et
donner instruction audit dispositif de sortie (36 ; 40 ; 36a ; 40a ; 36b ; 40b) d'émettre ledit un desdits signaux (180 ; 184) identifié par ledit comportement de notification quand un desdits autres événements se produit durant ledit un rendez-vous parmi ladite pluralité de rendez-vous de calendrier.

12. Procédé tel que revendiqué dans la revendication 11, où la pluralité de profils (110a) sont personnalisables.

13. Procédé tel que revendiqué dans la revendication 11 ou 12, où ledit dispositif (20 ; 20a ; 20b) comporte un assistant numérique personnel sans fil, un ordinateur personnel, un téléphone cellulaire, un téléphone intelligent ou n'importe quelle combinaison de ces derniers.

14. Procédé tel que revendiqué dans n'importe lesquelles des revendications 11 à 13, où lesdits signaux (180 ; 184) comportent des signaux audibles, mécaniques ou visuels ou n'importe quelle combinaison de ces derniers.

15. Procédé tel que revendiqué dans n'importe lesquelles des revendications 11 à 14, où ledit autre événement (178 ; 182 ; 186 ; 278 ; 286 ; 290) est une réception d'un message électronique ou d'une alerte quotidienne et ledit signal identifie la réception dudit message ou de ladite alerte.

16. Procédé tel que revendiqué dans n'importe lesquelles des revendications 11 à 14, où ledit dispositif électronique (20 ; 20a ; 20b) comprend la fonctionnalité d'un téléphone et ledit autre événement (178 ; 182 ; 186 ; 278 ; 286 ; 290) est une réception d'un appel téléphonique.

17. Procédé tel que revendiqué dans n'importe lesquelles des revendications 11 à 16, où ledit mode de notification (116 ; 120 ; 200 ; 204 ; 212 ; 200b ; 204b ; 212b) est automatiquement sélectionné sur la base d'une chaîne prédéfinie de caractères (234) comprise avec ledit rendez-vous de calendrier (104 ; 112 ; 104a ; 112a ; 260 ; 264).

18. Procédé tel que revendiqué dans n'importe laquelle des revendications 11 à 17, où chaque profil parmi ladite pluralité de profils différents (110a) donne lieu à une sortie de notification différente pour d'autres événements se produisant dans des applications différentes (70 ; 82 ; 86).

19. Support de stockage lisible par ordinateur contenant un jeu d'instructions pour un dispositif électronique (20 ; 20a ; 20b), ledit jeu d'instructions comportant des instructions pour implémenter un procédé tel que revendiqué dans n'importe laquelle des revendications 11 à 18.
